# EUROPÄISCHE PATENTSCHRIFT

(11) **EP 0 362 666 B1**
(45) Veröffentlichungstag und Bekanntmachung des Hinweises auf die Patenterteilung: **17.11.1994**
(21) Anmeldenummer: 89117706.5
(22) Anmeldetag: 26.09.1989
(51) Int. Cl.: C01B 7/07

(54) **Verfahren zur Herstellung von AOX-armer, chlorfreier Salzsäure**
Process for the preparation of AOX poor chlorhydric acid containing no chlorine
Procédé de préparation d'acide chlorhydrique exempte de chlore et pauvre en AOX

(30) Priorität: 28.09.1988 DE 3832804
(43) Veröffentlichungstag der Anmeldung: 11.04.1990
(73) Patentinhaber: HOECHST AKTIENGESELLSCHAFT, 65926 Frankfurt am Main (DE)
(72) Erfinder: Freyer, Walter, Dr., D-8901 Leitershofen (DE); Olffers, Theo, D-8906 Gersthofen (DE)

(56) Entgegenhaltungen:
- DE-A- 2 634 959
- DE-A- 3 611 886
- GB-A- 1 070 515
- GB-A- 2 040 897
- US-A- 3 980 758

## Beschreibung

Die Erfindung bezieht sich auf ein verbessertes Verfahren zur Herstellung von AOX-armer, chlorfreier Salzsäure aus chlorwasserstoffhaltigen, organische Verunreinigungen enthaltenden Rohgasen.

Bei der Chlorierung organischer Verbindungen im technischen Maßstab fällt in großen Mengen Chlorwasserstoff an, der üblicherweise durch Absorption in Wasser zu Salzsäure aufbereitet wird.

Zu den Reaktionen, bei denen sich Chlorwasserstoff als Nebenprodukt bildet, gehört z.B. die Chlorierung von Carbonsäuren zu teil- oder perchlorierten Carbonsäuren, beispielsweise die Chlorierung von Essigsäure zu Mono- oder Trichloressigsäure:

CH₃COOH + Cl₂ → CH₂Cl - COOH + HCl

C

H₃COOH + 3 Cl₂ → CCl₃ - COOH + 3 HCl

und auch die Umsetzung von Paraffinen mit Chlor:

CₙH₂ₙ₊₂ + mCl₂ → CₙH₂ₙ₊₂₋ₘ - Clₘ + mHCl

Hierunter fällt die technisch bedeutsame Chlorierung von Methan zu seinen verschiedenen Chlorderivaten ebenso wie die Reaktion langkettiger Paraffine mit Chlor zu Chlorparaffinen mit verschiedenen Substitutionsgraden.

Ebenso wird HCl in Freiheit gesetzt bei der Herstellung von Estern und Säuren aus den Säurechloriden: 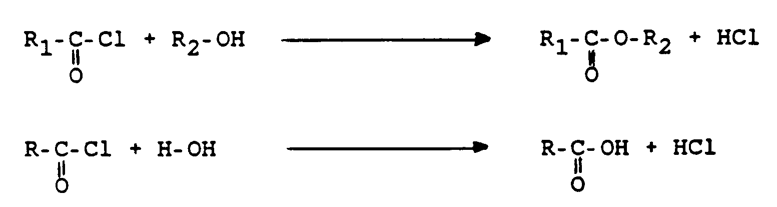
sowie bei der Kern- und Seitenkettenchlorierung von Aromaten unter Verwendung von Chlor, z.B. bei der Herstellung von Chlorderivaten des Benzols und des Toluols:

C₆H₆ + Cl₂ → C₆H₅Cl + HCl

C₆H₅CH₃ + Cl₂ → C₆H₅CH₂Cl + HCl

Da die Reaktionen nicht quantitativ den obigen Abläufen folgen, sind die Hauptprodukte, insbesondere aber auch der anfallende Chlorwasserstoff- und demzufolge die daraus gewonnene Salzsäure - mit Nebenprodukten verunreinigt.

Ein Teil der Verunreinigungen verbleibt nach der Absorption im Abgas und muß daraus entfernt werden, bevor das Abgas in die Atmosphäre abgegeben werden kann. Auch die erzeugte Salzsäure muß gereinigt werden, bevor sie für die verschiedenen Zwecke - u.a. in der Lebensmittelindustrie - einsatzfähig ist.

Bei den Verunreinigungen, die in der Salzsäure und den Abgasen gefunden werden, handelt es sich zum größten Teil um chlorierte Kohlenwasserstoffe. Ein Maß für den Grad der Verunreinigung ist der Gehalt an Aktivkohle adsorbierbarer organischer Halogenverbindungen, der sogenannte AOX-Gehalt. Da bei fast allen Chlorierungsreaktionen das Chlor nicht vollständig verbraucht wird, findet man in der aus den Chlorierrestgasen gewonnenen Salzsäure und in den Abgasen meistens einen mehr oder weniger großen Rest von freiem Chlor.

Das freie Chlor ist im Abgas und in der Salzsäure ebenso unerwünscht wie andere Verunreinigungen und muß aus Gründen des Immissionschutzes bzw. zur Verbesserung der Säurequalität entfernt werden.

Es ist bekannt, daß man eine an organischen Verunreinigungen ärmere Salzsäure und ein Abgas erhält, welches mit solchen Verbindungen nur noch in Spuren kontaminiert ist, wenn man die Chlorierrestgase vor der Absorption einer thermischen Behandlung unterwirft. Dies geschieht in der Weise, daß man die verunreinigten, chlorwasserstoffhaltigen Gase in geeigneten Brennkammern auf ca. 600°C - 1200°C erhitzt, wobei die Energiezufuhr meistens durch Verbrennen von Erdgas oder anderen Brennstoffen bei Sauerstoffüberschuß erfolgt und die Temperatur sich nach der Art der Verunreinigung richtet. Man erhält auf diese Weise Rauchgase, die zwar einen niedrigeren Gehalt an organischen Stoffen, wohl aber noch freies Chlor enthalten.

Dies rührt daher, daß bei Anwesenheit von Sauerstoff das ursprünglich im Chlorierrestgas enthaltene freie Chlor sich nicht quantitativ gemäß 2 CL₂ + 2 H₂O → 4 HCl + O₂ zu HCl umsetzen kann, sondern sich sogar zusätzlich freies Chlor bilden kann.

Das freie Chlor löst sich bei der anschließenden Absorption des Chlorwasserstoffs zum Teil in der entstehenden Salzsäure, zum Teil verbleibt es im Abgas. Die Entchlorung sowohl der Salzsäure als auch des Abgases ist nur mit erheblichem verfahrenstechnischen Aufwand möglich. So gelingt die Entchlorung der Salzsäure beispielsweise durch Ausblasen oder durch Strippen nur unvollkommen und ist mit einem merklichen Konzentrationsverlust an Chlorwasserstoff verbunden.

Außerdem entstehen neue chlor- und chlorwasserstoffhaltige Abgasströme, welche ihrerseits wieder gereinigt werden müssen. Dies gelingt ebenso wie die Entchlorung der ursprünglichen Abgase im Prinzip nur durch alkalische Wäschen, wodurch das Abluftproblem auf die Abwasserseite verlagert wird.

Ein Verfahren zur Entfernung von Chlorwasserstoff und Chlor aus Verbrennungsgasen unter Gewinnung von Salzsäure, welches mit eine mehrstufigen Abgaswäsche arbeitet, ist bereits beschrieben worden (vgl. DE-A 3 611 886).

Weiterhin ist ein Verfahren bekannt, welches der Herabsetzung des Gehaltes an freiem Chlor in den Rauchgasen einer Verbrennungsanlage dient (vgl. GB-A 2 040 897). Dabei wird Wasserstoff in die Quenchzone der Verbrennungsapparatur eingespeist, wobei die Menge des Wasserstoffs von der Luftmenge abhängt, die der Brennkammer zugeführt wird. Auf diese Weise ist es gelungen, den Chlorgehalt eines Rauchgases von ursprünglich 600 mg/m³ auf 48 mg/m³ herabzusetzen. Rauchgase mit Chlorgehalten dieser Größenordnung führen aber noch nicht zu chlorfreier Salzsäure und chlorfreien Abgasen.

Schließlich wurde auch ein Verfahren zur Vernichtung von chlorierten Kohlenwasserstoffrückständen unter Gewinnung von Salzsäure bekannt (vgl. GB-B 1 070 515). Zwar wird hier der Gehalt an freiem Chlor im Rauchgas durch Minimierung des Sauerstoffgehaltes und Einspeisen von Dampf und/oder Wasser in die Brennkammer niedrig gehalten, die Erzeugung von Salzsäure ohne Restgehalte an elementarem Chlor gelingt jedoch anscheinend nicht, da im Restgas nach der HCl-Absorption zum Teil noch freies Chlor gefunden wird.

Der vorliegenden Erfindung lag nun die Aufgabe zugrunde, ein einfach auszuführendes Verfahren zur Herstellung von AOX-armer, chlorfreier Salzsäure aus Chlorierrestgasen zu entwickeln, wobei auch die Qualität der Abgase verbessert werden sollte.

Die Erfindung betrifft somit ein Verfahren zur Herstellung von chlorfreier Salzsäure mit niedrigem Gehalt an Aktivkohle adsorbierbarer organischer Halogenverbindungen durch thermische Behandlung von Chlorwasserstoff und/oder Chlor und/oder organische Verbindungen enthaltenden Rohgasen und anschließender Absorption des Chlorwasserstoffs in Wasser, dadurch gekennzeichnet, daß die thermische Behandlung unter Verwendung eines Wasserstoff und/oder Kohlenwasserstoff enthaltenden Brenngases einstufig in der Weise durchgeführt wird, daß man die Rohgase durch Kontaktieren mit einer Stützflamme auf eine Temperatur von 800 °C bis 1600°C erhitzt, wobei die Brenngas- und Sauerstoffzufuhr so geregelt wird, daß in der Brennzone kein Ruß entsteht und im Abgas überschüssiger Wasserstoff vorhanden ist.

Das nach dem erfindungsgemäßen Verfahren aufzuarbeitende Rohgas enthält Chlorwasserstoff, Chlor, Stickstoff, Chlorkohlenwasserstoffe, Kohlenwasserstoffe und andere Verbindungen in wechselnden Mengen. Es wird einer thermischen Umsetzung unterworfen, indem es mit einer ausreichenden Menge eines brennbaren wasserstoffhaltigen Gases und Sauerstoff zusammengeführt und verbrannt wird, wobei in einer technischen Anlage der Sauerstoff auch in Form von Luft zugeführt werden kann.

Als Brenngas eignen sich neben Wasserstoff auch andere brennbare Gase, wie z.B. Methan, Ethan und Propan. Obwohl das Verfahren auch mit technischen Gasen, wie z.B. Flüssiggas durchzuführen ist, wird man in Großanlagen vorteilhaft solche Brennstoffe einsetzen, bei denen das Verhältnis von Kohlenstoff zu Wasserstoff möglichst klein ist.

Die Temperatur in der Brennkammer liegt im Bereich von 800 bis 1 600°C, vorzugsweise zwischen 1 000 und 1 400°C. Brenngas und Sauerstoff bzw. Luft werden in derartigen Mengen zugegeben, daß die gewünschte Brennkammertemperatur erreicht wird, sich in der Brennzone kein Ruß bildet und das Rauchgas einen Wasserstoffanteil von etwa 1 bis 15 Vol.-%, vorzugsweise 2 bis 5 Vol.-% enthält.

Die Menge des Brenngases und des Sauerstoffs bzw. der Luft ist abhängig von der Menge und der Zusammensetzung der aufzuheizenden Rohgase. Sind die Menge der Rohgase und deren Zusammensetzung stärkeren Schwankungen unterworfen, so kann eine automatische Regelung der Brennstoff- und Sauerstoff- bzw. Luftzufuhr - unter Umständen unter Einsatz eines Prozeßrechners - von Vorteil sein.

Das entstehende Rauchgas enthält neben Chlorwasserstoff praktisch keine anderen Chlorverbindungen und keine organischen Stoffe. Es wird nach an sich bekannten Methoden vom Chlorwasserstoff befreit.

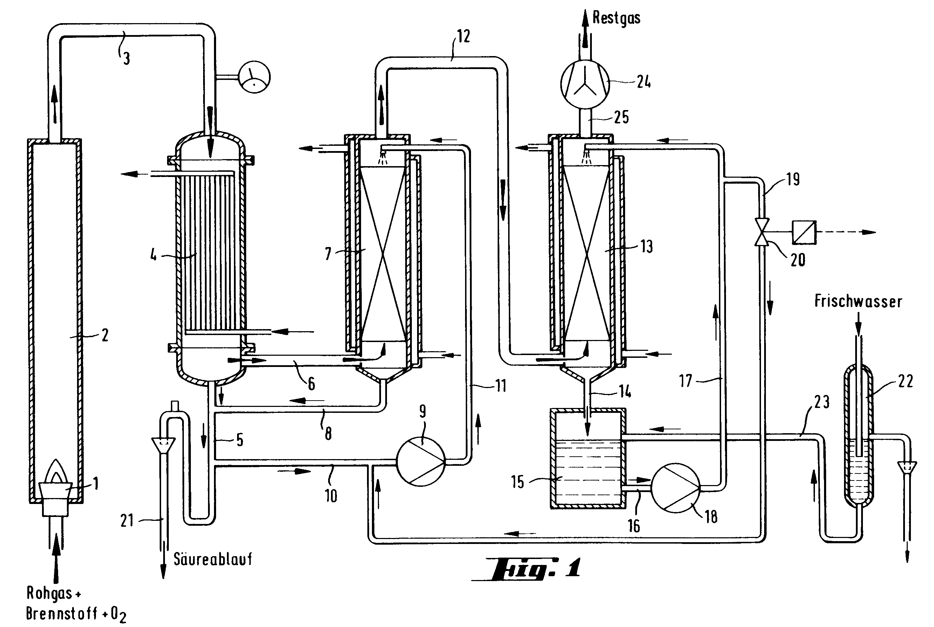

Das erfindungsgemäße Verfahren wird vorzugsweise in einer Apparatur, wie sie in Figur 1 schematisch dargestellt ist, durchgeführt. Für den Absorptionsteil sind allerdings auch andere Anordnungen denkbar und möglich. Das aufzuarbeitende Rohgas wird unter Zugabe eines Brenngases durch den Brenner (1) in die Brennkammer (2) geleitet und dort verbrannt. Das heiße Abgas strömt durch die Leitung (3) in den Kühler (4), wo ein Teil des Chlorwasserstoffs als Salzsäure kondensiert und durch die Leitung (5) abfließt. Das gekühlte Gasgemisch wird durch Leitung (6) in den Wäscher (7) überführt. Hier wird durch im Kreislauf geführte Salzsäure ein Teil des Chlorwasserstoffs entfernt, welche durch Leitung (8) zur Leitung (5) abfließt. Ein Teil der hier abfließenden Salzsäure wird von der Pumpe (9) durch die Leitung (10) angesaugt und durch die Leitung (11) in den Wäscher (7) gedrückt. Das Gas strömt weiter durch Leitung (12) in den Wäscher (13), wo es durch im Kreislauf geführte verdünnte Salzsäure vom Chlorwasserstoff befreit wird. Die Salzsäure fließt aus dem Wäscher (13) durch Leitung (14) in die Vorlage (15) und von dort durch Leitungen (16) und (17) und Pumpe (18) zurück in den Wäscher (13). Von der Leitung (17) zweigt die Leitung (19) ab und führt über ein Magnetventil (20) zur Leitung (10). Durch dieses Magnetventil (20) wird immer soviel Waschflüssigkeit aus dem zweiten in den ersten Waschkreislauf eingespeist, daß am Säureablauf (21) eine Salzsäure konstanter Konzentration abfließt. Über eine Vorlage (22) mit Niveauregelung wird über Leitung (23) die gleiche Menge Frischwasser in die Vorlage (15) nachgefüllt. Das vom Chlorwasserstoff befreite Restgas wird vom Exhaustor (24) derart über Leitung (25) abgezogen, daß ein leichter Unterdruck in der Apparatur herscht, und ins Freie gegeben.

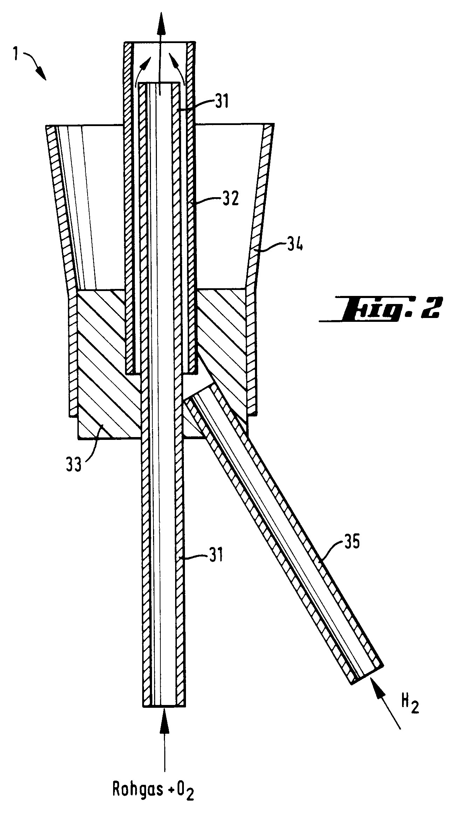

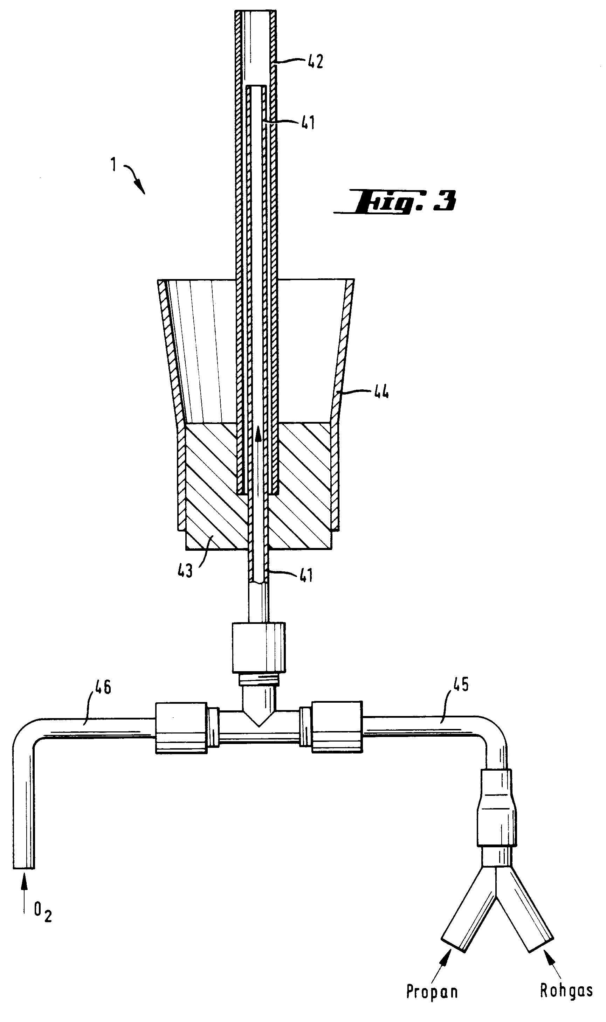

Die Figuren 2 und 3 zeigen bevorzugte Ausführungsformen von für das erfindungsgemäße Verfahren im Labormaßstab geeigneten Brennern.

Der Brenner gemäß Figur 2 besteht aus einem inneren Rohr (31) und einem äußeren Rohr (32), welche konzentrisch in einem Stopfen (33) befestigt sind. Der Stopfen (33) steckt in einem weiten Rohr (34). Ein weiteres Rohr (35) ist schräg in Stopfen (33) befestigt und steht mit dem Zwischenraum zwischen Rohr (31) und Rohr (32) in Verbindung. Dieser Brenner ist für die Verwendung von Wasserstoff als brennbares Gas bevorzugt. Der Wasserstoff wird durch das Rohr (35) dem Brenner zugeführt, das Rohgas und Sauerstoff durch das Rohr (31).

Für die Verwendung von Propan als brennbares Gas wird ein Brenner wie in Figur 3 bevorzugt, bei welchem ein seitliches Rohr fehlt und Rohgas, Propan und Sauerstoff gemeinsam durch das innere Rohe einströmen. Inneres Rohr (41) und äußeres Rohr (42) sind konzentrisch im Stopfen (43) befestigt, welcher von einem Rohr (44) umgeben ist. Durch das Rohr (45) strömen Propan und Rohgas und durch Rohr (46) Sauerstoff in das Rohr (41).

Die vorteilhafte Wirkungsweise des Verfahrens auf die Säure und Abgasqualität konnte aus dem bisherigen Stande der Technik nicht hergeleitet werden.

Nach dem erfindungsgemäßen Verfahren gelingt es nämlich überraschenderweise, selbst größere Mengen an Chlorkohlenwasserstoffen, die im Rohgas enthalten sind, zu Kohlenstoffoxiden und Chlorwasserstoff umzusetzen, ohne daß die Bildung von Ruß zu beobachten ist. Die aus den Rauchgasen gewonnene Salzsäure ist wasserklar und enthält organische Chlorverbindungen, die an Aktivkohle adsorbierbar sind, nur noch im Spurenbereich von weniger als einem mg/dm³.

Sie ist außerdem frei von elementarem Chlor und bedarf daher keiner weiteren Behandlung. Die Abgase, welche nach der Absorption des Chlorwasserstoffs anfallen, sind ebenfalls chlorfrei und enthalten ebenso wie die Salzsäure nur noch Spuren von organischen Verbindungen. Sie können ohne weitere Reinigungsschritte in die Atmosphäre abgegeben werden. Wasch- oder andere Fabrikationsabwässer, die entsorgt werden müßten, fallen nicht an.

Abgesehen von diesen Vorteilen ist auch eine Verunreinigung der Salzsäure und des Abgases durch organische Stoffe, die bei der thermischen Behandlung theoretisch erst entstehen könnten, im bevorzugten Temperaturbereich nicht zu befürchten.

Im folgenden sollen anhand von Beispielen die Durchführung und die Wirkungsweise des Verfahrens erläutert werden.

Alle m³-Angaben beziehen sich auf den Normalzustand (273 K, 1013 hPa).

### Beispiel 1

In einer Laborapparatur gemäß Figur 1, bei der der Brenner (1) im wesentlichen aus zwei ineinandergesteckten Keramikröhrchen gemäß Figur 2 bestand und die Brennkammer 2 von einem Quarzrohr mit einem Innendurchmesser von 45 mm und einer Länge von 650 mm gebildet wurde, wurden 0,2 m³/h Rohgas mit folgender Zusammensetzung thermisch behandelt:

| | |
|---|---|
| HCl | 80,1 Vol.-% |
| Cl₂ | 10,2 Vol.-% |
| N₂ | 9,6 Vol.-% |
| Methylchlorid | 1,0 g/m³ |
| Ethylchlorid | 1,3 g/m³ |
| Trichlormethan + Trichlorethen | 1,6 g/m³ |
| Tetrachlormethan | 1,1 g/m³ |
| n-Paraffine C₁₀/C₁₃ | 0,2 g/m³ |

Dem Rohgas wurden 0,13 m³/h Sauerstoff zugemischt.
Das Gasgemisch wurde durch das innere Keramikröhrchen geführt. Durch den Ringspalt zwischen den beiden Keramikröhrchen wurden 0,36 m³/h Wasserstoff geführt. Die Flammentemperatur betrug 1210°C und wurde mit Hilfe eines Referenzkörpers aus keramischem Material mit einem Strahlungspyrometer gemessen.
Das Abgas wurde im Kühler (4), der aus einem Kugelkühler nach DIN 12 581 mit einer Länge von 400 mm bestand, abgekühlt und in den Wäschern (7) und (13) von Chlorwasserstoff befreit. Die Wäscher bestanden aus doppelwandigen Glasrohren mit einem Innendurchmesser von 50 mm und einer Länge von 460 mm. Der Innenraum war mit Raschigringen der Größe 10 x 10 mm gefüllt. Der Mantel wurde mit Kühlwasser gespeist.
In den Wäschern wurden mit Hilfe der Pumpen (9) und (18) jeweils ca. 90 dm³/h Waschflüssigkeit umgepumpt.
Das zur Erzeugung der Salzsäure benötigte Frischwasser wurde über die Vorlage (15), die ein Volumen von 1 dm³ hatte und deren Füllstand durch den Überlauf (22) bei 80 % konstant gehalten wurde, in die Apparatur eingespeist. Über ein von einem Impuls/Pausen-Relais gesteuertes Magnetventil (20) wurde soviel Waschflüssigkeit aus dem zweiten in den ersten Waschkreislauf eingespeist, daß die am Säureablauf (21) abfließende Salzsäure eine Konzentration von etwa 30 Masse-% HCl aufwies.
Mit Hilfe des Exhaustors (24) wurde in der Apparatur ein solcher Unterdruck eingestellt, daß ein Manometer an der Leitung (3) einen Sog von ca. 3 mbar anzeigte.
Auf diese Weise konnte Salzsäure mit 30,2 Masse-% HCl und einem AOX-Gehalt von < 1 mg/dm³ gewonnen werden.
Freies Chlor konnte in der Salzsäure nicht nachgewiesen werden. Im Restgas nach der Absorption waren weder freies Chlor noch Reste der ursprünglich im Rohgas vorhandenen organischen Verbindungen nachweisbar.

### Beispiel 2

Der Wasserstoffgehalt des feuchten Abgases aus Beispiel 1 betrug ca. 15 Vol.-%. Um zu prüfen, ob geringere Wasserstoffgehalte im Abgas zu Chlordurchschlägen führen, wurde ein Rohgasgemisch der folgenden Zusammensetzung thermisch behandelt:

| Stoff | Vol.-% |
|---|---|
| HCl | 33,8 |
| Cl₂ | 4,3 |
| N₂ | 4,0 |
| H₂ | 41,4 |
| O₂ | 16,4 |

Rechnerisch ergibt sich hieraus ein Abgas mit nachstehender Zusammensetzung:

| Stoff | Vol.-% |
|---|---|
| HCl | 50,7 |
| H₂O | 39,3 |
| N₂ | 4,8 |
| H₂ | 5,2 |

In der hergestellten Salzsäure, die eine Konzentration von 32,4 Masse-% an HCl aufwies, konnte ebenfalls kein freies Chlor nachgewiesen werden, obwohl der Wasserstoffgehalt im feuchten Rauchgas nur noch ca. 5 Vol.-% betragen hatte.

### Beispiel 3

In der in Beispiel 1 beschriebenen Laborapparatur wurden unter Verwendung eines Brenners gemäß Figur 3 0,2 m³/h Rohgas der folgenden Zusammensetzung thermisch behandelt:

| | |
|---|---|
| HCl | 77,9 Vol.-% |
| Cl₂ | 9,2 Vol.-% |
| N₂ | 12,2 Vol.-% |
| Methylchlorid | 0,6 g/m³ |
| Ethylchlorid | 3,7 g/m³ |
| Trichlormethan + Trichlorethen | 16,0 g/m³ |
| Tetrachlormethan | 11,0 g/m³ |
| n-Paraffine C₁₀/C₁₃ | 5,6 g/m³ |

Als Brenngas wurden 0,036 m³/h Propan und 0,126 m³/h Sauerstoff eingesetzt.

Die Temperatur betrug ca. 1250°C. Die Flamme brannte rußfrei.

Die gewonnene Salzsäure hatte eine Konzentration von 30,1 Masse-% an HCl. Sie war wasserklar und enthielt kein freies Chlor. Der AOX-Gehalt betrug weniger als 1 mg/dm³.

Im Abgas nach der Absorption waren nur noch Spuren organischer Verbindungen (< 5 mg/m³) nachweisbar.

### Beispiel 4

Um zu prüfen, ob im bevorzugten Temperaturbereich bei der unterstöchiometrischen Verbrennung von Propan möglicherweise organische Schadstoffe erst entstehen, wurde in einer der Apparatur gemäß Beispiel 1 ähnelnden Vorrichtung Propan bei Sauerstoffmangel bei ca. 1250°C verbrannt.

Die Bedingungen wurden so gewählt, daß das Molverhältnis von Propan zu Sauerstoff 1:4,6 betrug (stöchiometrisches Verhältnis 1:5). Die Flamme brannte blautransparent und rußfrei.

Aus den heißen Rauchgasen wurde das bei der Verbrennng entstandene Wasser durch indirekte Kühlung mit Kühlwasser von ca. 20°C soweit wie möglich niedergesschlagen und als Kondensat aufgefangen.

Im Kondensat konnten organische Verbindungen bis zu einem Siedebereich von etwa 150°C gaschromatographisch nicht nachgewiesen werden.

Im Rauchgas selbst, wie es nach der Kondensation anfiel, waren Aldehyde und Ketone nicht nachweisbar. Auch andere mögliche Reaktionsprodukte - wie z.B. Säuren - konnten nicht festgestellt werden.

## Patentansprüche

1. Verfahren zur Herstellung von chlorfreier Salzsäure mit niedrigem Gehalt an Aktivkohle adsorbierbarer organischer Halogenverbindungen durch thermische Behandlung von Chlorwasserstoff und/oder Chlor und/oder organische Verbindungen enthaltenden Rohgasen und anschließender Absorption des Chlorwasserstoffs in Wasser, dadurch gekennzeichnet, daß die thermische Behandlung unter Verwendung eines Wasserstoff und/oder Kohlenwasserstoff enthaltenden Brenngases einstufig in der Weise durchgeführt wird, daß man die Rohgase durch Kontaktieren mit einer Stützflamme auf eine Temperatur von 800 °C bis 1600°C erhitzt, wobei die Brenngas- und Sauerstoffzufuhr so geregelt wird, daß in der Brennzone kein Ruß entsteht und im Abgas überschüssiger Wasserstoff vorhanden ist.

## Claims

1. A process for producing chlorine-free hydrochloric acid having a low content of organic halogen compounds which arc adsorbable on activated carbon, by thermal treatment of crude gases containing hydrogen chloride and/or chlorine and/or organic compounds and subsequent absorption of the hydrogen chloride in water, which comprises carrying out the thermal treatment with the use of a hydrogen- and/or hydrocarbon-containing fuel gas in one stage such that the crude gases are heated to a temperature of 800°C to 1600°C by contacting with a supporting flame, the fuel gas feed and oxygen feed being controlled in such a way that no soot is formed in the combustion zone and excess hydrogen is present in the waste gas.

## Revendications

1. Procédé de préparation d'acide chlorhydrique aqueux exempt de chlore, ayant une faible teneur en composés organiques halogénés adsorbables sur du charbon actif ("AOX"), par traitement thermique de gaz bruts renfermant de l'acide chlorhydrique gazeux et/ou du chlore et/ou des composés organiques, puis absorption de l'acide chlorhydrique gazeux dans l'eau, caractérisé en ce que le traitement thermique est effectué en une étape au moyen d'un gaz de combustion contenant de l'hydrogène et/ou un hydrocarbure, en portant les gaz bruts, par contact avec une flamme de soutien, à une température comprise entre 800°C et 1600°C, l'arrivée de gaz de combustion et d'oxygène étant contrôlée de telle sorte qu'aucune suie ne se forme dans la zone de combustion et que l'hydrogène est présent en excès dans les fumées.
